# EUROPÄISCHE PATENTANMELDUNG

(11) **EP 2 439 017 A1**
(43) Veröffentlichungstag der Anmeldung: **11.04.2012**
(21) Anmeldenummer: 10405187.5
(22) Anmeldetag: 05.10.2010
(51) Int. Cl.: B23Q 3/155, B23Q 11/10

(54) **Werkzeugvorrichtung**

(71) Anmelder: J. Schneeberger Maschinen Holding AG, 4914 Roggwil (CH)
(72) Erfinder: Schneeberger, Jürg, 4914 Roggwil (CH)
(74) Vertreter: Rüfenacht, Philipp Michael

(57) **Zusammenfassung**

Erfindungsgemäss wird eine Werkzeugvorrichtung (1) zur Befestigung an einer Bearbeitungsvorrichtung (100) zur spanenden Bearbeitung eines Werkstücks bereitgestellt, wobei diese Werkzeugvorrichtung (1) eine Werkzeuganordnung (2) und eine typischerweise als Kühlmittelverteiler ausgebildete Trägervorrichtung (3) umfasst. Die Werkzeuganordnung (2) umfasst eine erste Befestigungsvorrichtung (6) zur Befestigung an der Bearbeitungsvorrichtung (100) und die Trägervorrichtung (3) umfasst eine zweite Befestigungsvorrichtung (11) zur Befestigung an der Bearbeitungsvorrichtung (100). Die Werkzeuganordnung (2) und die Trägervorrichtung (3) sind mit einer dritten Befestigungsvorrichtung (14) aneinander befestigbar.

## Beschreibung

Die Erfindung betrifft eine Werkzeugvorrichtung zur Befestigung an einer Bearbeitungsvorrichtung zur spanenden Bearbeitung eines Werkstücks, wobei die Werkzeugvorrichtung eine Werkzeuganordnung und eine Trägervorrichtung umfasst und wobei die Werkzeuganordnung eine erste Befestigungsvorrichtung zur Befestigung an der Bearbeitungsvorrichtung und der Trägervorrichtung eine zweite Befestigungsvorrichtung zur Befestigung an der Bearbeitungsvorrichtung umfasst.

### Stand der Technik

Werkzeugvorrichtungen aus dem oben genannten technischen Gebiet, welche eine Werkzeuganordnung und eine typischerweise als Kühlmittelverteiler ausgebildete Trägervorrichtung umfassen, sind bekannt. Bei solchen Werkzeugvorrichtungen umfasst die Werkzeuganordnung beispielsweise eine oder mehrere Schleifscheiben oder Fräswerkzeuge, welche auf einer Drehachse befestigt sind. Es kann aber auch ein anderes Werkzeug sein, welches auf einer Drehachse befestigt ist. Der Kühlmittelverteiler wird benötigt, um im Betrieb das Werkzeug oder die Werkzeuge der Werkzeuganordnung zu kühlen, typischerweise mit einem flüssigen Kühlmittel, welches auch als kombiniertes Kühl- und Schmiermittel ausgebildet sein kann.

Solche Werkzeugvorrichtungen werden für den Gebrauch an einer Bearbeitungsvorrichtung befestigt, indem die Werkzeuganordnung und der Kühlmittelverteiler an der Bearbeitungsvorrichtung befestigt werden. Um diese Befestigung zu ermöglichen, ist ein Ende der Drehachse der Werkzeuganordnung konusartig geformt und weist in der Stirnfläche eine Nut auf. Der Konus der Werkzeuganordnung wird in einem Gegenstück in der Bearbeitungsvorrichtung eingeführt und festgeklemmt. Durch Eingriff in die stirnflächige Nut kann die Drehachse der Werkzeuganordnung von der Bearbeitungsvorrichtung angetrieben werden. In ähnlicher Weise weist der Kühlmittelverteiler einen konusartigen Zapfen auf, welche zur Befestigung in ein Gegenstück der Bearbeitungsvorrichtung eingeführt und festgeklemmt wird. Zur Zuführung des Kühlmittels umfasst der Kühlmittelverteiler eine zur Bearbeitungsvorrichtung hin ausgerichtete Öffnung. Im Betrieb, d.h. im angekoppelten Zustand, wird das Kühlmittel dem Kühlmittelverteiler durch eine entsprechend angeordnete, abgedichtete Öffnung in der Bearbeitungsvorrichtung zugeführt und innerhalb des Kühlmittelverteilers in einem Schlauch oder einem Rohr mit einer Düse am Ende weitergeführt.

Wenn eine solche Werkzeuganordnung an einer Bearbeitungsvorrichtung befestigt ist, so ist der Kühlmittelverteiler derart zur Werkzeuganordnung angeordnet, dass das Kühlmittel von der Düse am Ende des Schlauchs oder Rohrs tangential zur Bewegungsrichtung der Schneide des rotierenden Werkzeugs auf das rotierende Werkzeug gespritzt wird.

Oft werden Bearbeitungsvorrichtungen derart betrieben, dass in kurzen zeitlichen Abständen verschiedene, oben beschriebene Werkzeugvorrichtungen ausgewechselt werden. Dieses Auswechseln erfolgt, indem jeweils die Werkzeuganordnung und der Kühlmittelverteiler je von einem Greifer ergriffen werden und an der Bearbeitungsvorrichtung angebracht, respektive von der Bearbeitungsvorrichtung entfernt werden. Sobald die zu tauschende Werkzeugvorrichtung an der Bearbeitungsvorrichtung befestigt ist oder an ihrem Lagerplatz abgelegt ist, lassen die beiden Greifer die Werkzeuganordnung und den Kühlmittelverteiler los. Um das Ergreifen und Loslassen der beiden Greifer zu ermöglichen, bestehen beide Greifer aus zwei parallel zueinander angeordneten Fingern. An ihren vorderen Enden weisen diese Finger auf der jeweils dem anderen Finger gegenüberliegenden Seite eine konkave Form auf. Die beiden an den beiden Fingern liegenden konkaven Formen bilden dabei zusammen Teilabschnitte eines Kreises. Sowohl die Werkzeuganordnung als auch der Kühlmittelverteiler weisen an ihrem Konus je eine umlaufende Nut auf. Der Abstand zwischen den beiden Fingern der beiden Greifern ist derart gewählt, dass die beiden Finger über diese Nut geschoben, beziehungsweise wieder weggezogen werden können. Dabei werden die beiden Finger jeweils auseinander gedrückt, bis die beiden konkaven Formen der Finger den Konus in der Nut umschliessen, beziehungsweise bis die beiden Finger von der Nut weggezogen sind. Dadurch können die Greifer die Werkzeuganordnung oder den Kühlmittelverteiler jeweils durch eine Bewegung senkrecht zur rotationssymmetrischen Achse der Konen ergreifen oder loslassen.

Der Nachteil dieser bekannten Werkzeugvorrichtungen ist, dass beim Werkzeugvorrichtungswechsel die Werkzeugvorrichtung im Wesentlichen entlang der Drehachse der Werkzeuganordnung bewegt wird. Das Ergreifen und Loslassen der Werkzeugvorrichtung erfolgt jedoch durch eine Bewegung der Transportvorrichtung senkrecht zur Drehachse der Werkzeuganordnung. Dies ist umständlich und verlangsamt den Werkzeugwechsel.

### Darstellung der Erfindung

Aufgabe der Erfindung ist es, eine dem eingangs genannten technischen Gebiet zugehörende Werkzeugvorrichtung zu schaffen, welche einen schnelleren Wechsel der Werkzeugvorrichtung an einer Bearbeitungsvorrichtung ermöglicht.

Die Lösung der Aufgabe ist durch die Merkmale des Anspruchs 1 definiert. Gemäss der Erfindung sind die Werkzeuganordnung und die Trägervorrichtung mit einer dritten Befestigungsvorrichtung aneinander befestigbar. Dies bedeutet, dass die dritte Befestigungsvorrichtung entweder an der Werkzeuganordnung angeordnet und an der Trägervorrichtung befestigbar sein kann, oder dass sie an der Trägervorrichtung angeordnet und an der Werkzeugvorrichtung befestigbar sein kann. Es ist aber auch möglich, dass die dritte Befestigungsvorrichtung zweiteilig ausgeführt ist, wobei der eine Teil an der Werkzeuganordnung und der andere Teil an der Trägervorrichtung angeordnet ist.

Beim Wechseln der Werkzeugvorrichtung an einer Bearbeitungsvorrichtung muss die Werkzeugvorrichtung durch eine Transportvorrichtung zur Bearbeitungsvorrichtung hin transportiert oder von der Bearbeitungsvorrichtung weg transportiert werden. Zudem muss die Transportvorrichtung in einer Leerfahrt von der an der Bearbeitungsvorrichtung befestigten Werkzeugvorrichtung entfernt werden oder zum Entfernen der Werkzeugvorrichtung zur Bearbeitungsvorrichtung hin bewegt werden. Diese Leerfahrten sind nötig, weil die Bearbeitungsvorrichtung nur dann betrieben werden kann, wenn die Transportvorrichtung vom Arbeitsbereich der Bearbeitungsvorrichtung entfernt ist.

Der Vorteil der dritten Befestigungsvorrichtung ist nun, dass die Werkzeuganordnung und die Trägervorrichtung, welche für den Transport zur Befestigung an der Bearbeitungsvorrichtung aneinander gehalten sind, das jeweils andere Element freigeben kann, während die Transportvorrichtung nach der Ankopplung zurückfährt. Bzw. dass die Werkzeuganordnung und die Trägervorrichtung beim Entfernen der Werkzeugvorrichtung von der Bearbeitungsvorrichtung noch während der Hinfahrt der Transportvorrichtung zur Bearbeitungsvorrichtung aneinander angekoppelt werden können. D. h. die beim Stand der Technik verlorene Zeit für die Leerfahrten kann bei der Erfindung sinnvoll genutzt werden, was bei jedem Werkzeugvorrichtungswechsel Zeit einspart.

Da für den Transport der Werkzeugvorrichtung im Gegensatz zum Stand der Technik nicht mehr zwei, sondern nur noch ein Greifer der Transportvorrichtung benötigt wird, kann zudem die dafür notwendige Halterung derart positioniert und ausgerichtet werden, dass ein möglichst einfacher und schneller Werkzeugvorrichtungswechsel resultiert.

Vorzugsweise umfassen die erste und die zweite Befestigungsvorrichtung je ein erstes Kopplungselement, welches jeweils mit einem entsprechenden zweiten Kopplungselement der Bearbeitungsvorrichtung verbindbar ist. Bei diesen ersten Kopplungselementen kann es sich beispielsweise um Halteelemente, insbesondere Zapfen, Noppen oder ähnliches handeln, während es sich bei den zweiten Kopplungselementen beispielsweise um eine Ausnehmung in der Bearbeitungsvorrichtung handeln kann. Zur Verbindung der Kopplungselemente können die ersten Kopplungselemente oder Halteelemente in die zweiten Kopplungselemente oder Ausnehmungen geführt werden. Die zweiten Kopplungselemente oder Ausnehmungen können über eine Spannvorrichtung verfügen, mittels welcher das jeweilige erste Kopplungselement oder erste Halteelement der Werkzeuganordnung oder der Trägervorrichtung befestigbar ist.

Bei einer Werkzeuganordnung, welche für den Schneidprozess um eine Drehachse rotiert, kann das erste Kopplungselement der Werkzeuganordnung z. B. als Halteelement ausgebildet sein, welches fest an dem entsprechenden zweiten Kopplungselement der Bearbeitungsvorrichtung befestigt wird, wobei dieses zweite Kopplungselement relativ zur restlichen Bearbeitungsvorrichtung drehbar ist. Das erste Kopplungselement der Werkzeuganordnung kann aber auch als Halteelement ausgebildet sein, welches drehbar um die Drehachse der Werkzeuganordnung gelagert ist. Beispielsweise kann es sich dabei um einen Ring handeln, welcher durch ein Kugellager drehbar um die Drehachse der Werkzeuganordnung gelagert ist.

Es besteht die Möglichkeit, dass die erste und die zweite Befestigungsvorrichtung nicht je ein speziell ausgebildetes erstes Kopplungselement umfassen, sondern durch die Werkzeuganordnung und/oder die Trägervorrichtung selbst bzw. durch einen ohnehin vorhandenen Teil derselben gebildet sind.

Der Vorteil der Kopplungselemente ist, dass die Werkzeugvorrichtung auf einfache Art und Weise mit der Bearbeitungsvorrichtung verbindbar ist. Dadurch kann bei einem Wechsel der Werkzeugvorrichtung Zeit gespart werden. Zudem wird durch diese Kopplungselemente die Wartung sowohl der Werkzeugvorrichtung als auch der Bearbeitungsvorrichtung vereinfacht.

Vorteilhafterweise ist die dritte Befestigungsvorrichtung an der Trägervorrichtung angeordnet und als erste Haltevorrichtung zum Halten der Werkzeuganordnung ausgebildet. Dies hat, insbesondere bei im Betrieb rotierenden Werkzeuganordnungen, den Vorteil, dass die Befestigungsvorrichtung nicht rotierbar an der Werkzeuganordnung sein muss, sondern fest an der Trägervorrichtung befestigt sein kann. Die Werkzeuganordnung und die Trägervorrichtung bilden quasi eine Einheit. Lediglich bei im Betrieb rotierenden Werkzeuganordnungen wird während des Betriebs die Haltevorrichtung gelöst, damit die Werkzeuganordnung frei rotieren kann. Ansonsten bleiben beide Elemente miteinander verbunden, sowohl während der Lagerung für einen späteren Einsatz, als auch während des Transports zur Bearbeitungsvorrichtung hin oder von dieser weg

Theoretisch besteht auch die Möglichkeit, dass die dritte Befestigungsvorrichtung als Haltevorrichtung zum Halten der Trägervorrichtung ausgebildet und an der Werkzeuganordnung angeordnet ist. Bei im Betrieb rotierbaren Werkzeuganordnungen müsste die Befestigungsvorrichtung in diesem Fall allerdings rotierbar an der Werkzeuganordnung befestigt sein.

Die dritte Befestigungsvorrichtung kann auch ein mit dieser zusammenwirkendes Gegenstück aufweisen. Das bedeutet, dass bei einer Anordnung der dritten Befestigungsvorrichtung an der Werkzeuganordnung an der Trägervorrichtung ein Gegenstück angeordnet sein kann. Bei einer Anordnung der dritten Befestigungsvorrichtung an der Trägervorrichtung hingegen kann ein Gegenstück an der Werkzeuganordnung angeordnet sein. Genauso besteht die Möglichkeit, dass die dritte Befestigungsvorrichtung zweiteilig ausgeführt ist und je ein Teil davon an der Werkzeuganordnung und an der Trägervorrichtung angebracht ist.

Bevorzugt ist die erste Haltevorrichtung lösbar, wenn die Werkzeugvorrichtung an der Bearbeitungsvorrichtung befestigt ist. Dies bedeutet, dass die Werkzeuganordnung und die Trägervorrichtung erst nach deren Befestigung an der Bearbeitungsvorrichtung voneinander freigegeben werden. Dies bedeutet aber auch, dass die Werkzeuganordnung und die Trägervorrichtung vor dem Lösen von der Bearbeitungsvorrichtung durch die erste Haltevorrichtung aneinander befestigt werden. Der Vorteil davon ist, dass ein sicherer Wechsel der Werkzeugvorrichtung erreicht wird.

Mit Vorteil ist die erste Haltevorrichtung als Klemmvorrichtung ausgebildet. Dabei ist sie vorzugsweise als Klemmvorrichtung mit zwei Fingern ausgebildet. Der Vorteil einer Ausbildung als Klemmvorrichtung ist, dass die erste Haltevorrichtung sehr schnell betätigbar ist. Die Ausbildung mit zwei Fingern ermöglicht, dass mit der ersten Haltevorrichtung das zu haltende Objekt mit den Fingern von zwei gegenüberliegenden Seiten angegangen und zwischen den Fingern festgeklemmt werden kann. Die zwei Finger können aber auch ermöglichen, dass das zu haltende Objekt durch Spreizen der Finger an zwei entsprechend angeordneten, sich gegenüberliegenden Flächen, z.B. in einem Hohlraum, des zu haltenden Objekts festgeklemmt werden kann. Der Vorteil der Finger ist, dass Klemmvorgänge durch zwei Finger sehr schnell und effektiv durchführ- und wieder lösbar sind. Zudem sind zwei Finger konstruktiv sehr einfach herzustellen. Entsprechend sind zwei Finger eine kostengünstige Umsetzung der Klemmvorrichtung.

Es besteht auch die Möglichkeit, dass die Klemmvorrichtung nicht durch zwei Finger ausgebildet ist. So kann sie beispielsweise durch eine Platte und einen Finger oder durch zwei Platten ausgebildet sein. Sie kann aber auch durch mehr als zwei Finger oder Platten ausgebildet sein. Des Weiteren besteht auch die Möglichkeit, dass die erste Haltevorrichtung nicht als Klemmvorrichtung ausgebildet ist. Beispielsweise kann sie durch eine passgenaue Form ausgebildet sein, in welcher entweder die Werkzeuganordnung oder die Trägervorrichtung gelagert werden kann. Bei einer geeigneten Anordnung der passgenauen Form kann dabei die Werkzeuganordnung oder die Trägervorrichtung durch die Schwerkraft in die passgenaue Form gedrückt werden, wodurch die Werkzeuganordnung und die Trägervorrichtung aneinander befestigt sind. Es besteht aber auch die Möglichkeit, dass die erste Haltevorrichtung durch eine Steckverbindung oder eine andere Art von Verbindung ausgebildet ist.

Die Erfindung ist grundsätzlich bei Bearbeitungsvorrichtungen anwendbar, bei welchen eine Werkzeugvorrichtung mit Werkzeuganordnung und zugehöriger Trägervorrichtung auswechselbar sind. Dies können auch Bearbeitungsvorrichtungen sein, bei denen die Werkzeuganordnung fixiert ist und die zur Spanabhebung notwendige Schnittbewegung beispielsweise durch Rotation des Werkstücks erzeugt wird. Die zur Formgebung benötigte Vorschubbewegung kann durch eine beliebige Relativbewegung zwischen Werkstück und Werkzeuganordnung erzeugt werden.

Besonders zur Wirkung kommt die Erfindung allerdings bei Bearbeitungsvorrichtungen, bei denen nicht durch eine Rotation des Werkstücks, sondern der Werkzeuganordnung erzielt wird. D. h. die Werkzeuganordnung ist für die spanende Bearbeitung vorteilhafterweise um eine Drehachse rotierbar und umfasst wenigstens ein spanendes Werkzeug wie beispielsweise eine Schleifscheibe, einen Fräser oder einen Bohrer.

Bei derartigen Bearbeitungsvorrichtungen ist es beim Stand der Technik wie eingangs beschrieben nämlich notwendig, dass die Transportvorrichtung zur Befestigung der Werkzeugvorrichtung an bzw. zum Entfernen derselben von der Bearbeitungsvorrichtung eine Querbewegung senkrecht zur Drehachse der Werkzeuganordnung durchgeführt werden muss. Demgegenüber ist gemäss der Erfindung erstens nur noch eine einzige Haltevorrichtung für den Transport der Werkzeugvorrichtung notwendig und zweitens kann diese derart an der Trägervorrichtung angeordnet sein, dass beim Befestigen oder Entfernen der Werkzeugvorrichtung keine Querbewegung der Transportvorrichtung mehr notwendig ist.

Bevorzugt ist die Werkzeugvorrichtung durch eine Bewegung in Richtung der Drehachse an der Bearbeitungsvorrichtung befestigbar. Vorzugsweise ist die Werkzeugvorrichtung zudem durch eine Bewegung in Richtung der Drehachse von der Bearbeitungsvorrichtung lösbar. Unter dem Begriff "in Richtung der Drehachse" ist hierbei zu verstehen, dass die Bewegung entlang einer durch die Drehachse der Werkzeuganordnung definierten Geraden verläuft. Der Vorteil dieser Befestigungs- und Lösbewegung ist, dass während eines Werkzeugvorrichtungswechsels möglichst kurze Wege zurückgelegt werden müssen und auf diese Weise Zeit eingespart werden kann.

Die massgebende Richtung der Drehachse ist hierbei jene, welche die Drehachse am Ende der Befestigungs-Bewegung bzw. zu Beginn der Löse-Bewegung inne hat. Typischerweise wird die Werkzeugvorrichtung entlang einer Geraden zur Bearbeitungsvorrichtung geführt und an dieser befestigt. D. h. die Richtung der Drehachse entspricht in diesem Fall der Richtung dieser Geraden. Erfolgt die Zuführung zur Bearbeitungsvorrichtung beispielsweise aber entlang einer Kreisbahn so entspricht die Richtung der Drehachse der Richtung der Tangente in jenem Punkt der Kreisbahn, an welchem die Werkzeugvorrichtung in die Bearbeitungsvorrichtung eingeführt wird.

Die Zuführbahn muss hierbei natürlich nicht kreisförmig, sondern kann auch eine insgesamt oder abschnittweise beliebig gekrümmte Bahn sein, welche auch gerade Abschnitte umfassen kann.

Zudem sollen auch Befestigungs- bzw. Löse-Bewegungen der Werkzeugvorrichtung unter diesen Begriff fallen, die im entscheidenden Bereich leicht von der präzisen Richtung der Drehachse abweichen, als nur im Wesentlichen der Richtung der Drehachse entsprechen.

Alternativ dazu besteht auch die Möglichkeit, dass die Werkzeugvorrichtung durch eine Bewegung in eine andere Richtung als parallel zur Drehachse der Werkzeuganordnung an der Bearbeitungsvorrichtung befestigbar, beziehungsweise von dieser lösbar ist.

Vorzugsweise umfasst die Werkzeugvorrichtung eine zweite Haltevorrichtung, an welcher sie während eines Transports zur Bearbeitungsvorrichtung hin oder von dieser weg von einer Transportvorrichtung gehalten werden kann, wobei die zweite Haltevorrichtung vorzugsweise als Klemmvorrichtung, insbesondere als Klemmvorrichtung mit zwei Fingern ausgebildet ist. Der Vorteil einer Ausbildung als Klemmvorrichtung ist, dass die zweite Haltevorrichtung sehr schnell betätigbar ist. Die Ausbildung mit zwei Fingern ermöglicht, dass mit der zweiten Haltevorrichtung die zu haltende Werkzeugvorrichtung mit den Fingern von zwei gegenüberliegenden Seiten angegangen und zwischen den Fingern festgeklemmt werden kann. Die zwei Finger ermöglichen aber auch, dass die zu haltende Werkzeugvorrichtung durch Spreizen der Finger an zwei entsprechend angeordneten, sich gegenüberliegenden Flächen, z.B. in einem Hohlraum der Werkzeugvorrichtung festgeklemmt werden kann. Solche Klemmvorgänge durch zwei Finger sind sehr schnell und effektiv durchführ- und wieder lösbar. Zudem sind zwei Finger konstruktiv sehr einfach herzustellen. Entsprechend sind zwei Finger eine kostengünstige Umsetzung der Klemmvorrichtung.

Es besteht auch die Möglichkeit, dass die Klemmvorrichtung nicht durch zwei Finger ausgebildet ist. So kann sie beispielsweise durch eine Platte und einen Finger oder durch zwei Platten ausgebildet sein. Genauso kann sie aber auch durch mehr als zwei Finger oder Platten ausgebildet sein. Des Weiteren besteht auch die Möglichkeit, dass die zweite Haltevorrichtung nicht als Klemmvorrichtung ausgebildet ist. Beispielsweise kann sie durch eine passgenaue Form ausgebildet sein, in welcher die Werkzeugvorrichtung gelagert werden kann. Bei einer geeigneten Anordnung der passgenauen Form kann dabei die Werkzeugvorrichtung durch die Schwerkraft in die passgenaue Form gedrückt werden, wodurch die Werkzeugvorrichtung gehalten wird. Es besteht aber auch die Möglichkeit, dass die zweite Haltevorrichtung durch eine Steckverbindung oder eine andere Art von Verbindung ausgebildet ist.

Die zweite Haltevorrichtung kann im Prinzip beliebig an der Werkzeugvorrichtung angeordnet sein.

Denkbar wäre etwa, dass die zweite Haltevorrichtung an der Werkzeuganordnung angeordnet ist, beispielsweise wenn ein erstes Kopplungselement der Werkzeuganordnung ein Halteelement ist, welches drehbar um die Drehachse der Werkzeuganordnung gelagert ist und welches im an der Bearbeitungsvorrichtung befestigten Zustand orientierungsfest zur Bearbeitungsvorrichtung ist, so kann die zweite Haltevorrichtung auch an diesem ersten Kopplungselement angeordnet sein. In diesem Fall ist zum Greifen der zweiten Haltevorrichtung keine bestimmte Drehposition der Werkzeuganordnung erforderlich.

Die zweite Haltevorrichtung kann z. B. auch rotationssymmetrisch ausgebildet und koaxial mit der Drehachse der Werkzeuganordnung an der Werkzeuganordnung angeordnet sein, so dass die Werkzeugvorrichtung von der Transportvorrichtung durch eine gegenseitige Relativbewegung in Richtung einer Drehachse der Werkzeuganordnung greifbar ist. Dadurch ist für einen Werkzeugvorrichtungswechsel nur eine einfache Bewegung erforderlich.

Vorteilhafterweise ist die zweite Haltevorrichtung jedoch an der Trägervorrichtung angeordnet. Dies vereinfacht das Greifen der Werkzeugvorrichtung insbesondere in jenen Fällen, in denen die Werkzeuganordnung im Betrieb um ihre Drehachse rotiert, da einerseits keine bestimmte Drehposition der Werkzeuganordnung zum Greifen der zweiten Haltevorrichtung und kein Umgreifen der an der Werkzeuganordnung befestigten Werkzeuge durch die Transportvorrichtung erforderlich ist.

Des Weiteren ist die zweite Haltevorrichtung mit Vorteil derart an der Trägervorrichtung angeordnet, dass die Werkzeugvorrichtung von der Transportvorrichtung durch eine gegenseitige Relativbewegung in Richtung einer Drehachse der Werkzeuganordnung greifbar ist. D. h. beim Befestigen der Werkzeugvorrichtung an der Bearbeitungsvorrichtung (Laden) erfolgt sowohl die Befestigung an der Bearbeitungsvorrichtung als auch das Loslassen der Werkzeugvorrichtung durch die Transportvorrichtung in jeweils derselben Richtung, nämlich in Richtung der Drehachse der Werkzeuganordnung. Entsprechend erfolgt auch beim Entfernen der Werkzeugvorrichtung (Entladen) sowohl das Ergreifen der Werkzeugvorrichtung wie auch das Lösen derselben in jeweils derselben Richtung, nämlich wiederum in Richtung der Drehachse. Weder beim Laden noch beim Entladen ist somit eine Querbewegung der Transportvorrichtung notwendig. Sowohl das Laden als auch das Entladen können also einzig durch Bewegungen in Richtung der Drehachse durchgeführt werden, was den Werkzeugvorrichtungswechsel beschleunigt.

Es ist zwar auch möglich, dass die zweite Haltevorrichtung derart an der Trägervorrichtung angeordnet ist, dass die Werkzeugvorrichtung von der Transportvorrichtung durch eine gegenseitige Relativbewegung in eine andere Richtung als diejenige der Drehachse der Werkzeuganordnung greifbar ist. Allerdings werden dadurch typischerweise die Transportwege und damit auch der Werkzeugwechsel verlängert

Bei einer bevorzugten Ausführungsvariante der Erfindung ist die Trägervorrichtung als Kühlmittelverteiler ausgebildet und umfasst wenigstens eine Kühlmittelzuleitung zur Zuführung von Kühlmittel zum Kühlmittelverteiler. Vorteilhafterweise umfasst der Kühlmittelverteiler weiter wenigstens eine Kühlmittelverteilvorrichtung zur gezielten Zuführung des Kühlmittels zu einem Ort der spanenden Bearbeitung. Dies hat den Vorteil, dass eine optimale Kühlung der Werkzeuganordnung sowie des zu bearbeitenden Werkstücks ermöglicht wird.

Nachfolgend wird für die Trägervorrichtung meist der Begriff Kühlmittelverteiler verwendet, wobei dieser Begriff - wo aus dem Zusammenhang nicht anders vorgegeben - auch eine Trägervorrichtung ohne Kühlmittelverteilfunktion oder eine Trägervorrichtung mit anderen oder zusätzlichen Funktionen umfassen soll.

Vorteilhafterweise ist das Kühlmittel dem Ort der spanenden Bearbeitung in einer Richtung senkrecht zur Drehachse der Werkzeuganordnung zuführbar. Insbesondere ist das Kühlmittel vorzugsweise tangential zu einer Bewegungsrichtung einer Schneide des Werkzeugs zuführbar. Dabei kann die Zuführgeschwindigkeit des Kühlmittels an die Geschwindigkeit des Werkzeugs am Auftreffpunkt des Kühlmittels auf das Werkzeug angepasst werden. Dies hat den Vorteil, dass eine optimale Kühlung erreicht wird.

Vorzugsweise umfasst die Kühlmittelverteilvorrichtung ein auf den Ort der spanenden Bearbeitung ausgerichtetes Rohr, an welchem vorzugsweise eine Düse angeordnet ist. Dies hat den Vorteil, dass das Aufbringen des Kühlmittels auf einfache Art und Weise sowohl in seiner Orientierung, seinem Auftreffpunkt auf das Werkzeug, als auch in seiner Auftreffgeschwindigkeit optimierbar ist. Dies hat den Vorteil, dass eine optimale Kühlung erreicht wird.

Das Verfahren zur Befestigung einer Werkzeugvorrichtung, welche eine Werkzeuganordnung und eine Trägervorrichtung umfasst, an einer Bearbeitungsvorrichtung zur spanenden Bearbeitung eines Werkstücks erfolgt erfindungsgemäss wie folgt. Dazu wird die von einer Transportvorrichtung gehaltene Werkzeugvorrichtung der Bearbeitungsvorrichtung von der Transportvorrichtung in Richtung einer Drehachse der Werkzeuganordnung zugeführt.

Zur Befestigung der Werkzeuganordnung und der Trägervorrichtung an der Bearbeitungsvorrichtung wird je ein Spannvorgang durchgeführt.

Danach wird die Transportvorrichtung in Richtung der Drehachse von der an der Bearbeitungsvorrichtung befestigten Werkzeugvorrichtung weggefahren, wobei die Werkzeugvorrichtung beim Wegfahren von der Transportvorrichtung freigegeben wird.

Die Bewegung der Transportvorrichtung zur Bearbeitungsvorrichtung hin sowie die Bewegung der Transportvorrichtung von der Werkzeugvorrichtung weg, verlaufen zumindest im Bereich der Bearbeitungsvorrichtung in Richtung der Drehachse der Werkzeuganordnung.

Beim Befestigungsvorgang werden die ersten Kopplungselemente der Werkzeuganordnung und der Trägervorrichtung jeweils mit einem entsprechenden zweiten Kopplungselement der Bearbeitungsvorrichtung verbunden. Bei diesen zweiten Kopplungselementen kann es sich beispielsweise um zwei Ausnehmungen in der Bearbeitungsvorrichtung handeln. Diese Ausnehmungen können über eine Spannvorrichtung verfügen, mittels welcher das erste Kopplungselement der Werkzeuganordnung und der Trägervorrichtung eingespannt werden können.

Vorzugsweise wird im Verfahren zur Befestigung der Werkzeugvorrichtung die Werkzeuganordnung während eines Transports zur Bearbeitungsvorrichtung hin von der Trägervorrichtung gehalten und die Werkzeuganordnung beim Wegfahren der Transportvorrichtung von der Trägervorrichtung freigegeben. Dies hat den Vorteil, dass die Werkzeuganordnung zum Transport fest mit der Trägervorrichtung verbunden ist und zur Bearbeitung eines Werkzeugs eine maximale Bewegungsfreiheit besitzt.

Es besteht auch die Möglichkeit, dass zur Befestigung der Werkzeugvorrichtung die Trägervorrichtung während eines Transports zur Bearbeitungsvorrichtung hin von der Werkzeuganordnung gehalten und die Trägervorrichtung nach den Spannvorgängen zur Befestigung der Werkzeugvorrichtung an der Bearbeitungsvorrichtung von der Werkzeuganordnung freigegeben wird.

Des Weiteren besteht die Möglichkeit, dass zur Befestigung der Werkzeugvorrichtung die Werkzeuganordnung oder die Trägervorrichtung während eines Transports zur Bearbeitungsvorrichtung hin von der Trägervorrichtung beziehungsweise von der Werkzeuganordnung gehalten und die Werkzeuganordnung beziehungsweise die Trägervorrichtung während den Spannvorgängen zur Befestigung der Werkzeugvorrichtung an der Bearbeitungsvorrichtung von der Trägervorrichtung beziehungsweise von der Werkzeuganordnung freigegeben wird.

Das Verfahren zum Entfernen einer an einer Bearbeitungsvorrichtung zur spanenden Bearbeitung eines Werkstücks befestigten und eine Werkzeuganordnung sowie eine Trägervorrichtung umfassende Werkzeugvorrichtung von der Bearbeitungsvorrichtung erfolgt erfindungsgemäss wie folgt. Dazu wird eine Transportvorrichtung in Richtung einer Drehachse der Werkzeuganordnung zur Bearbeitungsvorrichtung hingefahren, wobei die Werkzeugvorrichtung beim Hinfahren von der Transportvorrichtung gegriffen wird. Es wird je ein Entspannvorgang durchgeführt zum Lösen der an der Bearbeitungsvorrichtung befestigten Werkzeuganordnung sowie der an der Bearbeitungsvorrichtung befestigten Trägervorrichtung von der Bearbeitungsvorrichtung.

Danach wird die von der Transportvorrichtung gehaltene Werkzeugvorrichtung von der Transportvorrichtung in Richtung der Drehachse der Werkzeuganordnung von der Bearbeitungsvorrichtung weggefahren.

Die Bewegung der Transportvorrichtung zur Bearbeitungsvorrichtung hin sowie die Bewegung der Transportvorrichtung von der Bearbeitungsvorrichtung weg verlaufen zumindest im Bereich der Bearbeitungsvorrichtung in Richtung der Drehachse der Werkzeuganordnung.

Bei den erwähnten zweiten Kopplungselementen kann es sich beispielsweise um Ausnehmungen in der Bearbeitungsvorrichtung handelt. Diese Ausnehmungen können über eine Spannvorrichtung verfügen, mittels welcher erste Kopplungselemente der Werkzeuganordnung und der Trägervorrichtung eingespannt sind und welche durch den Entspannvorgang von der Bearbeitungsvorrichtung gelöst werden können.

Diese beiden erfindungsgemässen Verfahren zur Befestigung und zum Entfernen einer erfindungsgemässen Werkzeugvorrichtung haben den Vorteil, dass durch die Transportvorrichtung jeweils im Bereich der Bearbeitungsvorrichtung nur Bewegungen in Richtung der Drehachse der Werkzeuganordnung, d. h. entlang einer durch die Drehachse definierten Geraden, durchgeführt werden müssen. Bewegungen in einer Richtung senkrecht zur Drehachse sind zur Befestigung bzw. zum Entfernen der Werkzeugvorrichtung nicht notwendig und entfallen vollständig. Dadurch kann während eines Werkzeugvorrichtungswechsels Zeit gespart werden.

Vorteilhafterweise wird im Verfahren zum Entfernen der Werkzeugvorrichtung die Werkzeuganordnung beim Hinfahren der Transportvorrichtung von der Trägervorrichtung gegriffen und während eines Transports von der Bearbeitungsvorrichtung weg gehalten. Dies hat den Vorteil, dass die Werkzeuganordnung zur Bearbeitung eines Werkzeugs zwar eine maximale Bewegungsfreiheit aufweist, für den Transport jedoch fest mit der Trägervorrichtung verbunden ist.

Es besteht aber auch die Möglichkeit, dass zum Entfernen der Werkzeugvorrichtung von der Bearbeitungsvorrichtung die Trägervorrichtung vor den Entspannvorgängen zum Lösen der Werkzeugvorrichtung von der Werkzeuganordnung gegriffen und während des Transports von der Bearbeitungsvorrichtung weg gehalten wird.

Zudem besteht die Möglichkeit, dass zum Entfernen der Werkzeugvorrichtung die Werkzeuganordnung oder die Trägervorrichtung während den Entspannvorgängen zum Lösen der Werkzeugvorrichtung von der Bearbeitungsvorrichtung von der Trägervorrichtung beziehungsweise der Werkzeuganordnung gegriffen und während des Transports von der Bearbeitungsvorrichtung weg gehalten wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

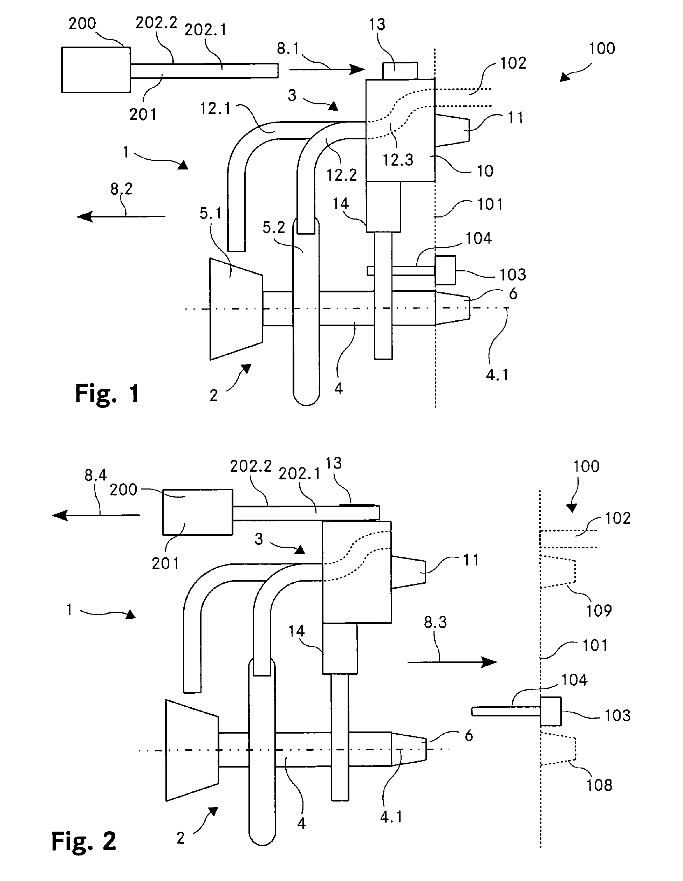

- Fig. 1: eine schematische Darstellung einer erfindungsgemässen Werkzeug-vorrichtung, welche eine Werkzeuganordnung und einen Kühlmittelverteiler umfasst und welche an einer Bearbeitungsvorrichtung befestigt ist,
- Fig. 2: eine schematische Darstellung der erfindungsgemässen Werkzeug-vorrichtung, welche von einer Transportvorrichtung gehalten wird,

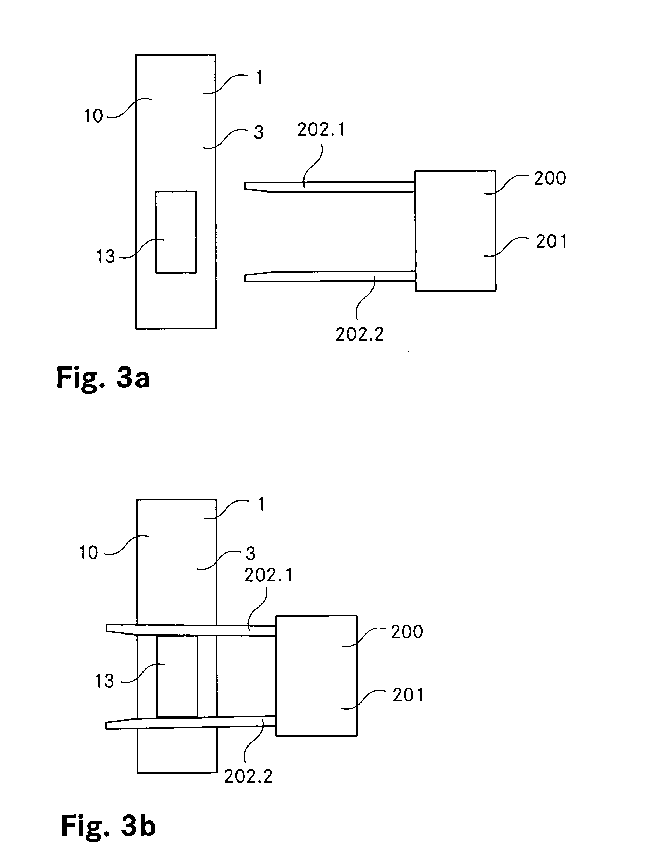

- Fig. 3a, b: eine schematische Darstellung eines Schnitts durch eine beispielhafte Ausführungsform einer Haltevorrichtung der Transportvorrichtung zum Halten der erfindungsgemässen Werkzeugvorrichtung, einmal dargestellt mit einer entsprechenden Haltevorrichtung der Werkzeugvorrichtung freigegeben und einmal dargestellt mit der gehaltenen, entsprechenden Haltevorrichtung der Werkzeugvorrichtung,

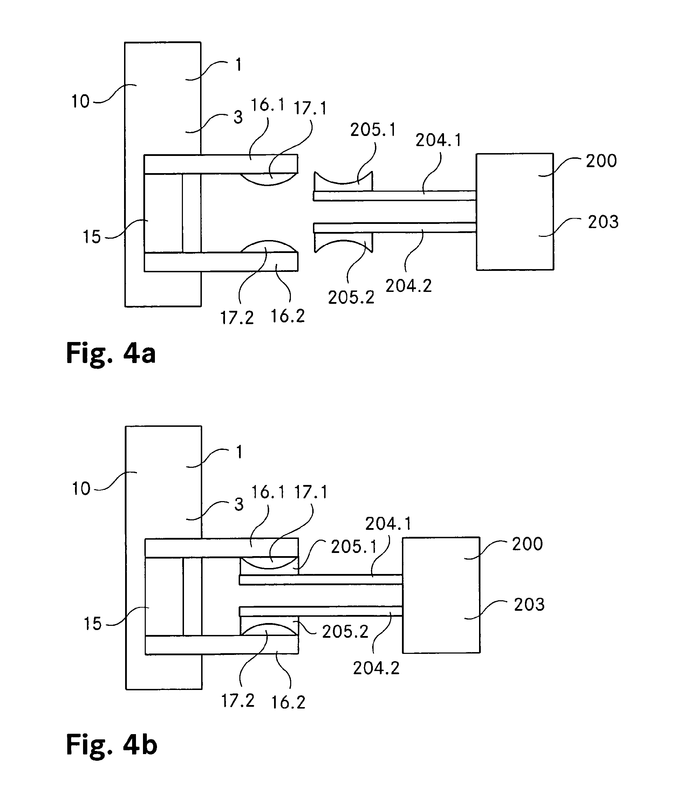

- Fig. 4a, b: eine schematische Darstellung eines Schnitts durch eine weitere Ausführungsform der Haltevorrichtung der Transportvorrichtung zum Halten der erfindungsgemässen Werkzeugvorrichtung, einmal dargestellt mit einer entsprechenden Haltevorrichtung der Werkzeugvorrichtung freigegeben und einmal dargestellt mit der gehaltenen, entsprechenden Haltevorrichtung der Werkzeugvorrichtung und

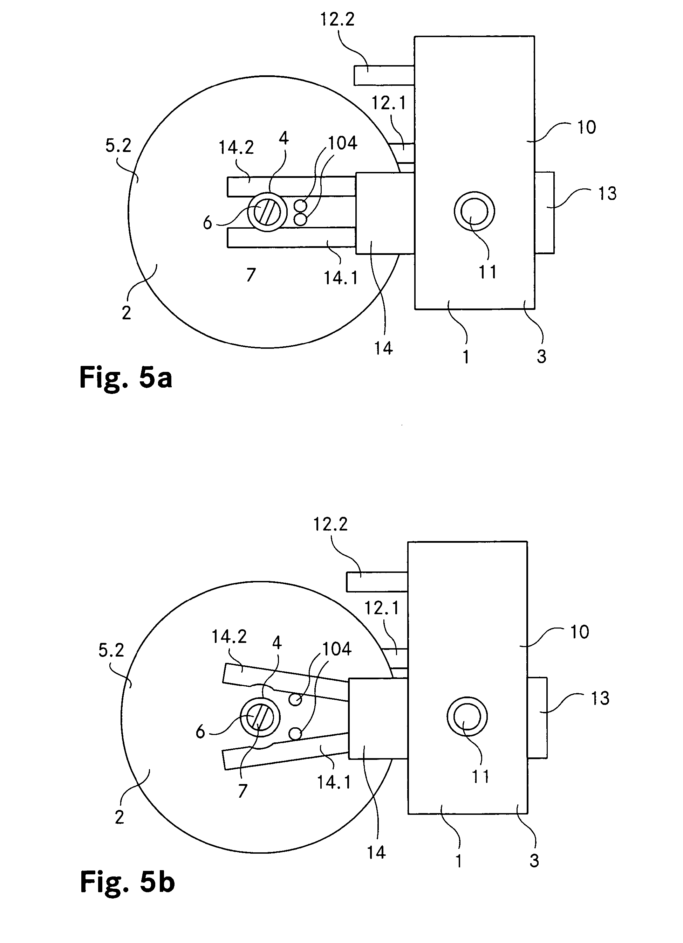

- Fig. 5a, b: eine schematische Darstellung der erfindungsgemässen Werkzeug-vorrichtung aus einer weiteren Perspektive, so dass eine Befestigungsvorrichtung erkennbar ist, mit welcher die Werkzeuganordnung und der Kühlmittelverteiler aneinender befestigbar sind, einmal aneinander befestigt dargestellt und einmal gegenseitig freigegeben dargestellt.
Grundsätzlich sind in den Figuren gleiche Teile mit gleichen Bezugszeichen versehen.

### Wege zur Ausführung der Erfindung

Figur 1 zeigt eine schematische Darstellung einer erfindungsgemässen Werkzeugvorrichtung 1, welche an einer Bearbeitungsvorrichtung 100 befestigt ist. Die Darstellung zeigt eine Aufsicht von senkrecht oben. Von der Bearbeitungsvorrichtung 100 ist nur eine Seitenwand 101, an welcher die Werkzeugvorrichtung 1 befestigt ist, als gestrichelte, gerade Linie gezeigt. Ansonsten ist die Bearbeitungsvorrichtung 100 transparent dargestellt, damit alle Teile der Werkzeugvorrichtung 1 erkennbar sind. Die Werkzeugvorrichtung 1 umfasst eine Werkzeuganordnung 2 und einen Kühlmittelverteiler 3. Die Werkzeuganordnung 2 kann je nach Anforderungen unterschiedlich aufgebaut und geformt sein. Sie umfasst eine Drehachse 4, um welche die Werkzeuganordnung 2 drehbar ist (angedeutet durch die Linie 4.1). Diese Drehachse 4 ist senkrecht zur Seitenwand 101 der Bearbeitungsvorrichtung 100 angeordnet. In der hier dargestellten Ausführungsform der Werkzeuganordnung 2 ist an einem ersten Ende der Drehachse 4, welches von der Bearbeitungsvorrichtung 100 abgewandt ist, koaxial mit der Drehachse 4 ein konusförmiger Schleifkopf 5.1 angebracht. Zudem ist etwas vom ersten Ende der Drehachse 4 entfernt, in einem Abstand zum konusförmigen Schleifkopf 5.1, eine runde Schleifscheibe 5.2 koaxial zur Drehachse 4 an der Drehachse 4 angebracht. Die Werkzeuganordnung 2 kann aber auch andere Werkzeuge wie beispielsweise Fräser oder Bohrer umfassen, welche an der Drehachse 4 angeordnet sind. Zudem können die Schleifwerkzeuge auch anders geformt sein und die Anzahl der Werkzeuge kann variiert werden.

Ein zweites Ende der Drehachse 4, welches dem ersten Ende der Drehachse 4 gegenüberliegt, ist zu einem Konus 6 geformt. Dieser Konus 6 ist in einer Ausnehmung in der Bearbeitungsvorrichtung 100 versenkt und befestigt. Die Befestigungsvorrichtung für den Konus 6 ist hier nicht gezeigt. Es handelt sich dabei um eine beliebige, bekannte Befestigungsvorrichtung. Beispielsweise kann es sich um eine Klemm- oder Schnappvorrichtung handeln. Es ist aber auch eine beliebige andere Befestigungsvorrichtung handeln, welche sowohl am Konus 6 als auch an der Bearbeitungsvorrichtung 100 angeordnet sein kann. Die Bearbeitungsvorrichtung 100 weist einen Antrieb für eine Rotation der Werkzeuganordnung 2 um die Drehachse 4 auf. Damit können der Schleifkopf 5.1 und die Schleifscheibe 5.2 in eine Drehbewegung versetzt werden, wodurch die Werkzeugvorrichtung 1 betreibbar ist.

Der Kühlmittelverteiler 3 ist seitlich neben der Werkzeuganordnung 2 angeordnet. Dabei muss er in Richtung der Drehachse 4 nicht auf derselben Höhe wie die Werkzeuganordnung angeordnet sein, sondern kann auch relativ zur Werkzeuganordnung 2 senkrecht zur Drehachse 4 verschoben sein. Eine solche Verschiebung kann durch die Form des Werkzeugs der Werkzeuganordnung 2 bedingt sein. Es besteht aber auch die Möglichkeit, dass die Bearbeitungsvorrichtung 100 nicht wie hier dargestellt eine gerade, ebene Seitenwand 101 aufweist. Entsprechend kann der Kühlmittelverteiler 3 auch in Richtung der Drehachse 4 versetzt zur Werkzeuganordnung 2 angeordnet sein.

Der Kühlmittelverteiler 3 weist einen Hauptkörper 10 auf. An einer der Bearbeitungsvorrichtung 100 zugewandten Seite des Hauptkörpers 10 ist ein Zapfen 11 angebracht. Dieser Zapfen 11 ist konusförmig. In der gezeigten Darstellung weist der Zapfen 11 die gleiche Form und die gleichen Masse wie der Konus 6 der Drehachse 4 der Werkzeuganordnung 2 auf. Der Zapfen 11 kann aber auch eine beliebige andere Form aufweisen und andere Masse als der Konus 6 besitzen. Wichtig ist, dass der Zapfen 11wie der Konus in einer Ausnehmung in der Bearbeitungsvorrichtung 100 versenkt und darin befestigt ist. Die dazu verwendete Befestigungsvorrichtung ist hier nicht gezeigt. Wie bei der Befestigungsvorrichtung für den Konus 6 kann es sich um eine beliebige, bekannte Befestigungsvorrichtung handeln, welche sowohl am Zapfen 11 als auch an der Bearbeitungsvorrichtung 100 angeordnet sein kann.

Auf einer der Bearbeitungsvorrichtung 100 abgewandten Seite des Hauptkörpers 10 des Kühlmittelverteilers 3 sind zwei Rohre 12.1, 12.2 angebracht. Diese Rohre 12.1, 12.2 sind seitlich zur Werkzeuganordnung 2 gebogen. An einem Ende dieser Rohre 12.1, 12.2 ist je eine Düse angebracht (nicht gezeigt). Diese Düsen sind auf die Schleifscheibe 5.1 bzw. den Schleifkopf 5.2 gerichtet. (Siehe Figuren 5a und 5b für eine weitere Darstellung der Ausrichtung der beiden Rohre 12.1, 12.2). Durch die Rohre 12.1, 12.2 wird im Betrieb der Werkzeugvorrichtung 1 ein flüssiges Kühlmittel auf das bzw. die Werkzeuge der Werkzeuganordnung 2 gespritzt. Oder präziser formuliert: Die während der Werkstückbearbeitung um die Drehachse 4 rotierenden Werkzeuge umfassen je mindestens eine Schneide für die spanende Bearbeitung des Werkstücks. Das Kühlmittel wird nun im Wesentlichen tangential zur Bewegungsrichtung der Schneide an den Ort der spanenden Bearbeitung gespritzt. Je nach Art, Ausbildung und Anzahl der Werkzeuge der Werkzeuganordnung 2 kann die Anzahl der Rohre 12.1, 12.2 variieren und die Ausrichtung sowie die Grösse der Rohre 12.1, 12.2 kann anders ausgeführt sein. Wichtig ist, dass sie im Betrieb eine optimale Kühlung der Werkzeuganordnung 2 ermöglichen. Zur Zuführung des Kühlmittels umfasst die Bearbeitungsvorrichtung 100 eine Kühlmittelzuleitung 102, die in einer dem Kühlmittelverteiler 3 zugewandten Öffnung an der Oberfläche der Bearbeitungsvorrichtung 100 mündet. Der Kühlmittelverteiler 3 umfasst eine entsprechend ausgebildete Kühlmittelleitung 12.3, die in einer der Bearbeitungsvorrichtung 100 zugewandten Öffnung an der Oberfläche des Kühlmittelverteilers 3 mündet und zu den Rohren 12.1 bzw. 12.2 führt. Im angekoppelten Zustand liegen die beiden Öffnungen einander gegenüber, sodass Kühlmittel von der Bearbeitungsvorrichtung durch die Kühlmittelzuleitung 12.3 und die Rohre 12.1 bzw. 12.2 geleitet werden kann. Eine ggf. zwischen den beiden Öffnungen angeordnete Dichtung ist nicht dargestellt.

An einer seitlichen Fläche des Hauptkörpers 10, welche der Werkzeuganordnung 2 abgewandt ist, ist ein Block 13 angebracht. Dieser Block 13 dient als Haltevorrichtung, an welchem die Werkzeugvorrichtung 1 von einer Transportvorrichtung gegriffen und für einen Transport gehalten werden kann. Grundsätzlich muss der Block 13 nicht an dieser seitlichen Fläche des Hauptkörpers 10 angeordnet sein. Es sollte jedoch derart am Kühlmittelverteiler 3 angebracht sein, dass die Werkzeugvorrichtung 1 am Block 13 von der Transportvorrichtung gegriffen und transportiert werden kann. Dazu kann der Block 13 auch eine andere Form als die eines Blocks aufweisen. Beispielsweise kann es sich auch um eine oder mehrere Öffnungen handeln, welche einen oder mehrere Finger der Transportvorrichtung aufnehmen können.

Wichtig ist, dass der Block 13 ein Ergreifen der Werkzeugvorrichtung 1 ermöglicht, wobei die Bewegung der Transportvorrichtung zum Ergreifen der Werkzeugvorrichtung 1 in dieselbe Richtung wie eine Bewegung zur Befestigung bzw. zum Lösen der Werkzeugvorrichtung 1 an bzw. von der Bearbeitungsvorrichtung 100 verläuft. Im hier gezeigten Ausführungsbeispiel verläuft diese Richtung entlang einer durch die Drehachse 4 der Werkzeuganordnung 2 definierten Geraden. Dies ist die Richtung, in welcher der Konus 6 und der Zapfen 11 der Werkzeuganordnung 2 bzw. des Kühlmittelverteilers 3 in den Ausnehmungen der Bearbeitungsvorrichtung 100 versenkt und befestigt werden.

Auf der dem Block 13 gegenüberliegenden seitlichen Fläche des Hauptkörpers 10 ist ein Greifer 14 angebracht, welcher der eingangs erwähnten dritten Befestigungsvorrichtung entspricht. Dieser Greifer 14 ist zur Werkzeuganordnung 2 ausgerichtet und derart geformt, dass er die Drehachse 4 der Werkzeuganordnung 2 greifen kann. Er ist in den Figuren 5a und 5b detaillierter dargestellt.

Die Bearbeitungsvorrichtung 100 umfasst weiter einen Öffnungsmechanismus 103, welcher dazu dient, den Greifer 14 mittels zweier Hebel 104 zu öffnen, wenn die Werkzeugvorrichtung 1 in der Bearbeitungsvorrichtung befestigt ist, sodass die Werkzeuganordnung 2 im Betrieb frei um ihre Drehachse 4 rotieren kann.

In Figur 1 ist weiter eine Transportvorrichtung 200 dargestellt, welche eine Klemmvorrichtung 201 umfasst, mit welcher die Werkzeugvorrichtung 1 am Block 13 ergriffen werden kann. Die Klemmvorrichtung 201 umfasst zwei parallel zueinander, übereinander angeordnete Finger 202.1, 202.2. Die Transportvorrichtung 200 ist nicht als Ganzes gezeigt. Sie ist beispielsweise Teil eines Roboters, der die zu befestigende Werkzeugvorrichtung aus einer Ablagevorrichtung (nicht gezeigt) entnimmt und der Bearbeitungsvorrichtung zur Befestigung darin zuführt bzw. der die von der Bearbeitungsvorrichtung 100 zu entfernende Werkzeugvorrichtung 1 wieder in der Ablagevorrichtung ablegt. Es ist nur die Klemmvorrichtung 201 mit den zwei Fingern 202.1, 202.2 dargestellt. In der gewählten Darstellung ist der untere Finger 202.2 vom oberen Finger 202,1 verdeckt. Die Finger 202.1, 202.2 umgreifen den Block 13 des Kühlmittelverteilers 3, indem der eine oberhalb des Blocks 13 und der andere unterhalb des Blocks 13 verläuft. Ein Abstand zwischen den beiden Fingern 202.1 202.2 der Klemmvorrichtung 201 ist ein wenig kleiner als eine Höhe des Blocks 13. Zudem weisen die beiden Finger 202.1, 202.2 an ihrer Spitze auf der dem jeweils anderen Finger 202.2, 202.1 zugewandten Seite eine Abschrägung auf. Dadurch können die beiden Finger 202.1, 202.2 über den Block 13 geschoben werden, wenn die Transportvorrichtung 200 in einer Richtung parallel zur Drehachse 4 der Werkzeuganordnung 2 zur Werkzeugvorrichtung 1 bewegt wird. Dabei werden die beiden Finger 202.1, 202.2 auseinandergedrückt und der Block 13 wird zwischen den Fingern 202.1, 202.2 eingeklemmt.

Das Entladen der Bearbeitungsvorrichtung 100, d. h. das Entfernen einer wie in Figur 1 dargestellt an der Bearbeitungsvorrichtung 100 befestigten Werkzeugvorrichtung 1 erfolgt folgendermassen:
- In einem ersten Schritt wird die Transportvorrichtung 200 in Richtung der Drehachse 4, d. h. in Richtung des Pfeils 8.1, zur Werkzeugvorrichtung hingefahren. Während dieser Anfahrbewegung der Transportvorrichtung - der sogenannten maskierten Zeit - wird der Greifer 14 von den beiden Hebeln 104 des Öffnungsmechanismus 103 freigegeben, sodass sich der Greifer 14 schliesst und so die Drehachse 4 der Werkzeuganordnung 2 greift, womit die Werkzeuganordnung 2 vom Kühlmittelverteiler 3 gehalten wird. Am Ende dieser Anfahrbewegung in Richtung des Pfeils 8.1 wird zudem der Kühlmittelverteiler 3 und damit die Werkzeugvorrichtung 1 wie oben beschrieben mit der Klemmvorrichtung 201 am Block 13 gefasst.
- In einem zweiten Schritt werden gleichzeitig die Befestigungen des Kühlmittelverteilers 3 und der Werkzeuganordnung 2 gelöst, sodass die Werkzeugvorrichtung 1 nicht mehr an der Bearbeitungsvorrichtung 100 befestigt ist.
- In einem dritten Schritt wird die Werkzeugvorrichtung 1 schliesslich von der Bearbeitungsvorrichtung 100 entfernt, indem die Werkzeugvorrichtung 1 von der Transportvorrichtung 200 in Richtung der Drehachse 4, d. h. in Richtung des Pfeils 8.2, von der Bearbeitungsvorrichtung 100 weggefahren und gegebenenfalls in einer Ablagevorrichtung abgelegt wird.

Eine Bewegung der Transportvorrichtung 200 oder der Werkzeugvorrichtung 1 (oder Teilen davon) in einer Richtung quer zur Drehachse 4 ist nicht notwendig.

Figur 2 zeigt wie Figur 1 eine schematische Darstellung einer erfindungsgemässen Werkzeugvorrichtung 1 in einer Aufsicht von senkrecht oben. Im Unterschied zur Figur 1 ist aber hier die Werkzeugvorrichtung 1 nicht an einer Bearbeitungsvorrichtung 100 befestigt, sondern wird für den Transport zur Bearbeitungsvorrichtung 100 von der Transportvorrichtung 200 gehalten. Der Greifer 14 des Kühlmittelverteilers 3 ist geschlossen und umgreift die Drehachse 4 der Werkzeuganordnung, sodass die Werkzeuganordnung 2 vom Kühlmittelverteiler 3 gehalten wird. So kann die gesamte Werkzeugvorrichtung 1 durch die Transportvorrichtung 200 transportiert werden, ohne dass sich die Relativposition des Kühlmittelverteilers 3 zur Werkzeuganordnung 2 ändert. Entsprechend kann die Werkzeugvorrichtung 1 mit dem Kühlmittelverteiler 3 und der Werkzeuganordnung 2 auch in derselben Relativposition in der Ablagevorrichtung abgestellt werden. Dies hat den Vorteil, dass bei der Bearbeitungsvorrichtung 100 die erfindungsgemässe Werkzeugvorrichtung 1 rasch und effizient ausgewechselt werden kann.

Das Laden der Bearbeitungsvorrichtung 100, d. h. das Befestigen einer wie in Figur 2 von der Transportvorrichtung 200 gehaltenen Werkzeugvorrichtung 1 an der Bearbeitungsvorrichtung 100 erfolgt folgendermassen:
- In einem ersten Schritt wird die Werkzeugvorrichtung 1 von der Transportvorrichtung 200 in Richtung der Drehachse 4, d. h. in Richtung des Pfeils 8.3, zur Bearbeitungsvorrichtung 100 hingefahren. Am Ende dieser Anfahrbewegung in Richtung des Pfeils 8.3 wird sowohl der Zapfen 11 des Kühlmittelverteilers 3 wie auch der Konus 6 der Werkzeuganordnung 2 in entsprechende Ausnehmungen 109, 108 der Bearbeitungsvorrichtung 100 eingeführt.
- In einem zweiten Schritt wird die Werkzeugvorrichtung 1 an der Bearbeitungsvorrichtung 100 befestigt, indem gleichzeitig der Konus 6 der Werkzeuganordnung 2 und der Zapfen 11 des Kühlmittelverteilers 3 in den entsprechenden Ausnehmungen 108, 109 festgespannt wird.
- In einem dritten Schritt wird schliesslich die Transportvorrichtung 200 von der Werkzeugvorrichtung 1 entfernt, indem sie in Richtung der Drehachse 4, d. h. in Richtung des Pfeils 8.4, von der Werkzeugvorrichtung 1 weggefahren wird. Zu Beginn dieser Wegfahrbewegung in Richtung des Pfeils 8.4 wird der an der Bearbeitungsvorrichtung befestigte Kühlmittelverteiler 3 und damit die gesamte Werkzeugvorrichtung 1 von der Klemmvorrichtung 201 freigegeben. Während dieser Wegfahrbewegung der Transportvorrichtung 200 - der sogenannten maskierten Zeit - werden die beiden Hebel 104 des Öffnungsmechanismus 103, welche zwischen den beiden Fingern 14.1, 14.2 des Greifers positioniert sind, auseinander gefahren, sodass die Finger 14.1, 14.2 auseinander gespreizt werden, sich der Greifer 14 öffnet und so die Drehachse 4 der Werkzeuganordnung 2 freigibt, womit die Werkzeuganordnung 2 nicht mehr vom Kühlmittelverteiler 3 gehalten wird.

Eine Bewegung der Transportvorrichtung 200 oder der Werkzeugvorrichtung 1 (oder Teilen davon) in einer Richtung quer zur Drehachse 4 ist hierbei nicht notwendig.

Figuren 3a und 3b zeigen einen Schnitt durch die Klemmvorrichtung 201 der Transportvorrichtung 200. Die Schnittfläche führt entlang der Finger 202.1, 202.2. Die weiter hinten liegenden Teile der Werkzeugvorrichtung 1 sind nicht dargestellt. In Figur 3a ist die Werkzeuganordnung 1 von der Transportvorrichtung 200 freigegeben, während sie in der Figur 3b von der Transportvorrichtung 200 gegriffen ist. Entsprechend ist in der Figur 3b zu erkennen, wie die beiden Finger 202.1, 202.2 leicht auseinander gedrückt sind und den Block 13 des Kühlmittelverteilers 3 zwischen sich einklemmen.

Die Figuren 4a und 4b zeigen eine weitere Ausführungsform der erfindungsgemässen Werkzeugvorrichtung 1. Wie in den. Figuren 3a und 3b ist hier ein Schnitt durch eine Klemmvorrichtung 203 der Transportvorrichtung 200 gezeigt. Im Unterschied zu den Figuren 3a und 3b ist hier jedoch die Klemmvorrichtung 203 anders ausgebildet. Zudem ist der Block 13 am Kühlmittelverteiler 3 durch eine andere Haltevorrichtung 15 ersetzt. Diese Haltevorrichtung 15 umfasst zwei stabile, parallel zueinander angeordnete Finger 16.1, 16.2. Diese beiden Finger 16.1, 16.2 sind übereinander angeordnet und verlaufen parallel zur Drehachse 4 (hier nicht gezeigt) der Werkzeuganordnung 2 (hier nicht gezeigt). An den freien Enden der Finger 16.1, 16.2 befinden sich auf einer dem jeweilig anderen Finger 16.2, 16.1 zugewandten Seite eine rundliche Auswölbung 17.1, 17.2, welche dem jeweilig anderen Finger 16.2. 16.1 zugewandt ist. Eine Form dieser Auswölbungen 17.1, 17.2 stellt z. B. einen Abschnitt eines Kreises dar. Rotationsachsen dieser Kreise sind senkrecht zu den Fingern 16.1, 16.2 ausgerichtet und zeigen senkrecht aus der Bildebene. Entsprechend kann ein Gegenstück entlang der Finger 16.1, 16.2 über diese Auswölbungen 17.1, 17.2 geschoben werden.

Wie bereits kurz erwähnt, ist die Klemmvorrichtung 203 der Transportvorrichtung 200 anders ausgebildet als in den Figuren 2, 3a und 3b dargestellt. Sie umfasst ebenfalls zwei parallel zueinander angeordnete Finger 204.1, 204.2. Diese Finger 204.1, 204.2 weisen auf einer dem jeweilig anderen Finger 204.2, 204.1 abgewandten Seite in einem Bereich der freien Enden der Finger 204.1, 204.2 ein Gegenstück 205.1, 205.2 zu den Auswölbungen 17.1, 17.2 der Haltevorrichtung 15 auf. Ein Abstand zwischen den Fingern 204.1, 204.2 der Klemmvorrichtung 203 ist etwas geringer als ein Abstand zwischen den beiden Fingern 16.1, 16.2 der Haltevorrichtung 15.

Um die Werkzeugvorrichtung 1 zu greifen, bewegt sich die Transportvorrichtung 200 in Richtung der Finger 16.1, 16.2, 204.1, 204.2 auf die Werkzeugvorrichtung 1 zu. Wenn die Gegenstücke 205.1, 205.2 der Klemmvorrichtung 203 der Transportvorrichtung 200 auf die Auswölbungen 17.1, 17.2 der Finger 16.1, 16.2 der Werkzeugvorrichtung 1 treffen, werden die Finger 204.1, 204.2 der Klemmvorrichtung 203 zusammengedrückt, bis die Gegenstücke 205.1, 205.2 passgenau auf den Auswölbungen 17.1, 17.2 der Finger 16.1, 16.2 der Werkzeugvorrichtung 1 sitzen. In diesem Zustand ist die Werkzeugvorrichtung 1 von der Transportvorrichtung 200 gegriffen und kann transportiert werden.

Die Figuren 5a und 5b zeigen eine schematische Darstellung einer Frontalansicht der erfindungsgemässen Werkzeugvorrichtung 1 aus der Perspektive der Bearbeitungsvorrichtung 100 (nicht gezeigt). In dieser Perspektive steht die Drehachse 4 der Werkzeuganordnung 2 senkrecht zur Bildebene. Dadurch ist die Anordnung des Kühlmittelverteilers 3 neben der Werkzeuganordnung 2 gezeigt. So ist ersichtlich, dass das Rohr 12.2 für die Zuführung von Kühlmittel zur Schleifscheibe 5.2 tangential zur Schleifscheibe 5.2 ausgerichtet ist. Entsprechend kann das Kühlmittel tangential auf die Schleifscheibe 5.2 aufgebracht werden. Bei einer Abstimmung der Kühlmittelfliessgeschwindigkeit auf die Rotationsgeschwindigkeit der Schleifscheibe 5.2 kann somit eine optimale Kühlung erreicht werden. Dasselbe gilt auch für das weitere Rohr 12.1 für die Zuführung von Kühlmittel zum Schleifkopf 5.1 (von der Schleifscheibe 5.2 verdeckt). Die genaue Anordnung des weiteren Rohrs 12.1 ist hier jedoch nicht ersichtlich, weil das freie Ende des Rohrs 12.1 von der Schleifscheibe 5.2 verdeckt ist.

Weiter ist in dieser Perspektive eine Aufsicht auf eine Stirnseite des Zapfens 11 im Hauptkörper 10 des Kühlmittelverteilers 3 gezeigt. Zudem ist in dieser Perspektive eine Aufsicht auf eine Stirnseite des Konus 6 der Drehachse 4 der Werkzeuganordnung 1 gezeigt. Dadurch ist zu erkennen, dass in dieser Stirnseite des Konus 6 eine Nut 7 eingebracht ist, in welche ein Antrieb der Werkzeuganordnung 2 eingreifen kann.

In Figur 5a ist gezeigt, wie der Kühlmittelverteiler 3 durch den Greifer 14 mit der Werkzeuganordnung 2 verbunden ist. Insbesondere ist gezeigt, dass der Greifer 14 zwei Finger 14.1, 14.2 umfasst, welche die Drehachse 4 der Werkzeuganordnung 2 umgreifen, beispielsweise in einer entsprechenden Ringnut im Konus 6. Zwischen den beiden Fingern 14.1 und 14.2 des Greifers 14 sind zudem die beiden Hebel 104 des Öffnungsmechanismus 103 der Bearbeitungsvorrichtung zu erkennen. Die beiden Hebel 104 sind nahe beieinander dargestellt, sodass sie zwar zwischen den beiden Fingern 14.1, 14.2 des Greifers 14 hindurch fassen, die Finger 14.1, 14.2 aber freigeben, sodass die Werkzeuganordnung 2 vom Kühlmittelverteiler 3 gehalten ist. Durch diese Verbindung ist es der Transportvorrichtung 200 (hier nicht gezeigt) möglich, die Werkzeugvorrichtung 1 als Einheit durch Ergreifen des am Hauptkörper 10 des Kühlmittelverteilers 3 angeordneten Blocks 13 zu ergreifen und zu transportieren. Dadurch kann die Werkzeugvorrichtung 1 von der Transportvorrichtung 200 an einer Bearbeitungsvorrichtung 100 ausgewechselt werden.

In Figur 5b ist gezeigt, wie der Greifer 14 des Kühlmittelverteilers 3 die Werkzeuganordnung 2 freigegeben hat. Hierfür wurden die beiden Hebel 104 vom Öffnungsmechanismus 103 (nicht dargestellt) auseinander gefahren, sodass die beiden Finger 14.1, 14.2 des Greifers 14 auseinander gespreizt wurden, wodurch die Drehachse 4 der Werkzeuganordnung 2 freigegeben ist. Dadurch ist auch ersichtlich, dass die beiden Finger 14.1, 14.2 je eine teilkreisförmige Einbuchtung aufweisen, mit welchen sie die Drehachse 4 der Werkzeuganordnung 4 umgreifen können. Dadurch wird im befestigten Zustand ein Verrutschen der Drehachse 4 zwischen den beiden Fingern 14.1, 14.2 des Greifers 14 verhindert.

In diesem freigegebenen Zustand, wie er in Figur 5b dargestellt ist, ist die Werkzeugvorrichtung 1 von einer Bearbeitungsvorrichtung 100 betreibbar, sofern die Werkzeugvorrichtung 1 an dieser Bearbeitungsvorrichtung 100 befestigt ist.

Anstelle der in den Figuren 1 und 2 dargestellten Kühlmittelzuführung kann diese auch durch einen separaten, am Kühlmittelverteiler angebrachten Zuführschlauch erfolgen. Es besteht aber auch die Möglichkeit, dass der Zapfen am Kühlmittelverteiler ein koaxiales Loch aufweist, durch welches das Kühlmittel von der Bearbeitungsvorrichtung zugeführt wird. Dazu ist zu bemerken, dass der Kühlmittelverteiler auch mehrere Zapfen aufweisen kann oder dass er auch eine oder mehrere Vertiefungen aufweisen kann, in welchen an der Bearbeitungsvorrichtung angeordnete Zapfen eindringen können. Falls mehrere Zapfen am Kühlmittelverteiler und/oder der Bearbeitungsvorrichtung angebracht sind, so kann die Klemmvorrichtung zur Befestigung des Kühlmittelverteilers an der Bearbeitungsvorrichtung auch getrennt von der Kühlmittelzuführung angeordnet werden. Weiter ist denkbar, dass der Kühlmittelverteiler selber einen Vorratsbehälter umfasst, in welchem Kühlmittel aufbewahrt wird und aus welchem es bei Bedarf entnommen werden kann. Dies hat jedoch den Nachteil, dass der Vorratsbehälter regelmässig befüllt werden muss.

Der Kühlmittelverteiler kann auch eine andere als die hier dargestellte Form mit einem blockartigen Hauptkörper aufweisen. Je nach Platzanforderungen bei der Lagerung der Werkzeugvorrichtung oder beim Betrieb der Werkzeuganordnung an der Bearbeitungsmaschine kann die Form beliebig variiert werden. Weiter kann die Form durch die Anordnung der Haltevorrichtung für die Transportvorrichtung beeinflusst werden. Diese kann an einer beliebigen Stelle des Kühlmittelverteilers angeordnet sein. Sie kann aber auch an der Werkzeuganordnung angeordnet sein.

Es ist zu beachten, dass auch andere als die oben dargestellte Ausführungsform des Greifers denkbar sind. Der Greifer kann durch irgendeine bekannte Haltevorrichtung, welche wieder lösbar ist, ersetzt werden. Zudem muss diese Haltevorrichtung die Werkzeuganordnung nicht unbedingt an der Drehachse greifen, sondern kann die Werkzeuganordnung auch an einer anderen Stelle greifen. Falls die Werkzeuganordnung beispielsweise über ein Element verfügt, welches um die Drehachse drehbar gelagert ist, so kann der Greifer die Werkzeuganordnung auch dort greifen.

Es besteht auch die Möglichkeit, dass die Haltevorrichtung nicht am Kühlmittelverteiler angeordnet ist. So kann sie beispielsweise auch an der Werkzeuganordnung angeordnet sein. Dies kann beispielsweise der Fall sein, wenn die Werkzeuganordnung über ein Element verfügt, welches um die Drehachse drehbar gelagert ist. Weiter besteht aber auch die Möglichkeit, dass die Haltevorrichtung zweiteilig ausgebildet ist, wovon der eine Teil am Kühlmittelverteiler und der andere Teil an der Werkzeuganordnung angeordnet ist. Zusammenfassend ist festzustellen, dass eine Werkzeugvorrichtung bereitgestellt wird, welche einen schnelleren Wechsel der Werkzeugvorrichtung an einer Bearbeitungsvorrichtung ermöglicht.

## Patentansprüche

1. Werkzeugvorrichtung (1) zur Befestigung an einer Bearbeitungsvorrichtung (100) zur spanenden Bearbeitung eines Werkstücks, wobei die Werkzeugvorrichtung (1) eine Werkzeuganordnung (2) und eine Trägervorrichtung (3), insbesondere eine als Kühlmittelverteiler ausgebildete Trägervorrichtung, umfasst und wobei die Werkzeuganordnung (2) eine erste Befestigungsvorrichtung (6) zur Befestigung an der Bearbeitungsvorrichtung (100) und die Trägervorrichtung (3) eine zweite Befestigungsvorrichtung (11) zur Befestigung an der Bearbeitungsvorrichtung (100) umfasst, **dadurch gekennzeichnet, dass** die Werkzeuganordnung (2) und die Trägervorrichtung (3) mit einer dritten Befestigungsvorrichtung (14) aneinander befestigbar sind.

2. Werkzeugvorrichtung (1) nach Anspruch 1, wobei die erste und die zweite Befestigungsvorrichtung (6, 11) je ein erstes Kopplungselement umfasst, welches jeweils mit einem entsprechenden zweiten Kopplungselement der Bearbeitungsvorrichtung (100) verbindbar ist.

3. Werkzeugvorrichtung (1) nach einem der Ansprüche 1-2, wobei die dritte Befestigungsvorrichtung (14) an der Trägervorrichtung (3) angeordnet ist und als erste Haltevorrichtung zum Halten der Werkzeuganordnung (2) ausgebildet ist.

4. Werkzeugvorrichtung (1) nach Anspruch 3, wobei die erste Haltevorrichtung lösbar ist, wenn die Werkzeugvorrichtung (1) an der Bearbeitungsvorrichtung (100) befestigt ist.

5. Werkzeugvorrichtung (1) nach einem der Ansprüche 3-4, wobei die erste Haltevorrichtung als Klemmvorrichtung ausgebildet ist, vorzugsweise als Klemmvorrichtung mit zwei Fingern (14.1, 14.2)

6. Werkzeugvorrichtung (1) nach einem der Ansprüche 1-5, wobei die Werkzeuganordnung (2) für die spanende Bearbeitung um eine Drehachse (4) drehbar ist und wenigstens ein spanendes Werkzeug wie beispielsweise eine Schleifscheibe (5.2), einen Fräser oder einen Bohrer umfasst.

7. Werkzeugvorrichtung (1) nach Anspruch 6, wobei die Werkzeugvorrichtung (1) durch eine Bewegung in Richtung der Drehachse (4) an der Bearbeitungsvorrichtung (100) befestigbar ist.

8. Werkzeugvorrichtung (1) nach einem der Ansprüche 1-7, wobei die Werkzeugvorrichtung (1) eine zweite Haltevorrichtung (13, 15) umfasst, an welcher sie während eines Transports zur Bearbeitungsvorrichtung (100) hin oder von dieser weg von einer Transportvorrichtung (200) gehalten werden kann, wobei die zweite Haltevorrichtung (13, 15) vorzugsweise als Klemmvorrichtung, insbesondere als Klemmvorrichtung mit zwei Fingern (16.1, 16.2) ausgebildet ist.

9. Werkzeugvorrichtung (1) nach Anspruch 8, wobei die zweite Haltevorrichtung (13, 16) derart an der Trägervorrichtung (3) angeordnet ist, dass die Werkzeugvorrichtung (1) von der Transportvorrichtung (200) durch eine gegenseitige Relativbewegung in Richtung einer Drehachse (4) der Werkzeuganordnung (2) greifbar ist.

10. Verfahren zur Befestigung einer eine Werkzeuganordnung (2) und eine Trägervorrichtung (3) umfassende Werkzeugvorrichtung (1) an einer Bearbeitungsvorrichtung (100) zur spanenden Bearbeitung eines Werkstücks, **dadurch gekennzeichnet, dass**
a) die von einer Transportvorrichtung (200) gehaltene Werkzeugvorrichtung (1) der Bearbeitungsvorrichtung (100) von der Transportvorrichtung (200) in Richtung einer Drehachse (4) der Werkzeuganordnung (2) zugeführt wird,
b) zur Befestigung der Werkzeuganordnung (2) und der Trägervorrichtung (3) an der Bearbeitungsvorrichtung (100) je ein Spannvorgang durchgeführt wird und
c) die Transportvorrichtung (200) in Richtung der Drehachse (4) von der an der Bearbeitungsvorrichtung (100) befestigten Werkzeugvorrichtung (1) weggefahren wird, wobei die Werkzeugvorrichtung (1) während dem Wegfahren von der Transportvorrichtung (200) freigegeben wird.

11. Verfahren nach Anspruch 10, wobei die Werkzeuganordnung (2) während eines Transports zur Bearbeitungsvorrichtung (100) hin von der Trägervorrichtung (3) gehalten wird und die Werkzeuganordnung (2) während dem Wegfahren der Transportvorrichtung von der Trägervorrichtung (3) freigegeben wird.

12. Verfahren zum Entfernen einer an einer Bearbeitungsvorrichtung (100) zur spanenden Bearbeitung eines Werkstücks befestigten und eine Werkzeuganordnung (2) sowie eine Trägervorrichtung (3) umfassende Werkzeugvorrichtung (1) von der Bearbeitungsvorrichtung(100), **dadurch gekennzeichnet, dass**
a) eine Transportvorrichtung (200) in Richtung einer Drehachse (4) der Werkzeuganordnung (4) zur Bearbeitungsvorrichtung (100) hingefahren wird, wobei die Werkzeugvorrichtung (1) während dem Hinfahren von der Transportvorrichtung (200) gegriffen wird,
b) je ein Entspannvorgang durchgeführt wird zum Lösen der an der Bearbeitungsvorrichtung (100) befestigten Werkzeuganordnung (2) sowie der an der Bearbeitungsvorrichtung (100) befestigten Trägervorrichtung (3) von der Bearbeitungsvorrichtung (100) und
c) die von der Transportvorrichtung (200) gehaltene Werkzeugvorrichtung (1) von der Transportvorrichtung (200) in Richtung der Drehachse (4) der Werkzeuganordnung (2) von der Bearbeitungsvorrichtung (100) weggefahren wird.

13. Verfahren nach Anspruch 12, wobei die Werkzeuganordnung (2) während dem Hinfahren der Transportvorrichtung von der Trägervorrichtung (3) gegriffen und während eines Transports von der Bearbeitungsvorrichtung (100) weg gehalten wird.
